# EUROPEAN PATENT APPLICATION

(11) **EP 4 672 356 A1**
(43) Date of publication of application: **31.12.2025**
(21) Application number: 25177724.9
(22) Date of filing: 20.05.2025
(51) Int. Cl.: H01M 4/131, H01M 4/525, H01M 4/62, H01M 10/0525, H01M 10/0567, H01M 10/0568, H01M 10/42, H01M 50/489, H01M 50/586, H01M 50/595

(54) **BATTERY**

(30) Priority: 25.06.2024 CN 202410829513
(71) Applicant: Zhuhai CosMX Battery Co., Ltd., Zhuhai, Guangdong 519180 (CN)
(72) Inventor: QIU, Yaming, Zhuhai, 519180 (CN)
(74) Representative: Murgitroyd & Company

(57) **Abstract**

The present disclosure relates to the field of batteries, and specifically to a battery. Including an electrolyte solution and a positive electrode plate, the electrolyte solution includes a first additive, and a weight content of the first additive in the electrolyte solution is A; the positive electrode plate includes a positive electrode current collector and a positive electrode active material layer, and a proportion of an orthographic projection of the positive electrode active material layer on the positive electrode current collector is B; the battery further includes a termination tape, and a thickness of the termination tape is C, in µm; A, B, and C satisfy: 18 ≤ 19 × B + 0.38 × C - 100 × A ≤ 38. The battery of the present disclosure has less gas generation and expansion during the cycling process, and exhibits excellent cycle life and cycling stability.

## Description

### TECHNICAL FIELD

The present disclosure relates to the field of battery technologies, and specifically relates to a battery.

### BACKGROUND

Lithium battery technology, as a core technology in the field of modern energy storage, has been widely used in electric vehicles, portable electronic devices, and other fields due to its advantages such as high energy density, long cycle life, and environmental friendliness. However, with the continuous development of lithium battery technology and the expansion of its application fields, there are some urgent problems to be solved in the conventional technology , among which the most prominent is the issue of how lithium battery can maintain long-term stable working.

### SUMMARY

The purpose of the present disclosure is to overcome the above-mentioned problem existing in the conventional technology and provide a battery. The battery of the present disclosure can maintain long-term stable working; that is, it exhibits excellent cycle life and cycling stability.

In conventional technologies, the long-term stable working performance of battery is poor. After extensive research, it has been found that reasons for the poor long-term stable working performance of battery are as follows. Firstly, an electrolyte solution, as an important component of the battery, directly affects the performance and cycle life of the battery. However, the electrolyte solution is prone to side reactions with a positive electrode active material under long-term use or specific conditions (such as high temperature, high pressure, and so on), leading to decomposition and deterioration of the electrolyte solution. The decomposition and deterioration of the electrolyte solution will reduce its ion conductivity, increase the internal resistance of the battery, and even produce harmful gases, posing a threat to the safety of the battery. Secondly, during the cycling process of the battery, side reactions between the electrolyte solution and the positive electrode active material will destroy the structure of the positive electrode active material, making it impossible for lithium ions to re-embed into the positive electrode active material, eventually leading to the excessive deposition of lithium ions on the surface of the negative electrode, resulting in lithium plating. Lithium plating will not only lead to the capacity decay of the battery, reduce the energy density and cycle life of the battery, but may also pierce the separator, causing internal short circuits in the battery and leading to safety issues. Third, during the cycling process of the battery, the electrolyte solution decomposes to produce gas, additionally the positive electrode active material and the negative electrode active material in the battery produce volumetric expansion during the charge/discharge cycling process, causing the battery to produce gas and expand, leading to increased internal pressure, structural damage to the battery, and eventually causing battery failure or even explosion. Based on the above findings, it is believed that the cycle life and cycling stability of the battery can be improved by protecting the positive electrode and suppressing battery expansion. Based on this, the following solution is proposed.

The present disclosure provides a battery, the battery includes an electrolyte solution and a positive electrode plate; the electrolyte solution includes a first additive, the first additive includes a substance shown in Formula I: 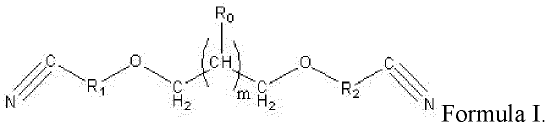 Where R₀ is selected from at least one of 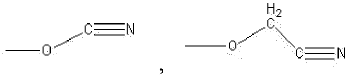 or 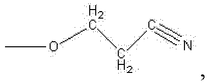 R₁ and R₂ are independently selected from C1-C3 alkyl group, m is an integer of 2-4; based on a total weight of the electrolyte solution, a content of the first additive is A.

The positive electrode plate includes a positive electrode current collector and a positive electrode active material layer located on at least one side surface of the positive electrode current collector, a proportion of an orthographic projection of the positive electrode active material layer on the positive electrode current collector is B.

The battery further includes a termination tape, the termination tape is located at a tail end of the positive electrode plate along a winding direction, and covers part of the positive electrode active material layer, a thickness of the termination tape is C, in unit of µm.

A, B, and C satisfy: 18 ≤ 19×B + 0.38×C - 100×A ≤ 38.

Due to its unique structure, the first additive not only has high stability but also efficiently complexes with metal ions on the surface of the positive electrode plate, forming a barrier between the positive electrode plate and the electrolyte solution, thereby preventing side reactions between other components in the electrolyte solution and the positive electrode plate, and maintaining the stability of the electrolyte solution. The proportion of the orthographic projection area of the positive electrode active material layer on the positive electrode current collector can also reflect the reaction intensity between the positive electrode plate and the electrolyte solution to some extent. A greater proportion of the orthographic projection area can enhance the charge-discharge rate and energy density of the battery, but it also means an increased contact area between the positive electrode active material and the electrolyte solution, which increases the risk of side reactions between the positive electrode active material and the electrolyte solution, leading to oxidation and deterioration of the electrolyte solution and increased gas production in the battery. The termination tape in the battery has a certain inhibitory effect on the expansion of the battery during the cycling process. The termination tape maintains the overall shape of the battery through mechanical interaction with the battery body, thereby physically inhibiting the expansion and deformation of the battery to some extent and maintaining the stable working of the battery.

However, merely adding the first additive to the electrolyte solution and adjusting the proportion of the orthographic projection area of the positive electrode active material layer on the positive electrode current collector and the thickness of the termination tape does not significantly mitigate the decomposition and deterioration of the electrolyte solution or the issues of lithium plating, gas production and expansion during the cycling process of the battery. It has been found that when the weight content of the first additive in the electrolyte solution, the proportion of the orthographic projection area of the positive electrode active material layer on the positive electrode current collector, and the thickness of the termination tape satisfy a specific relationship, there is a significant mitigation in the decomposition and deterioration of the electrolyte solution and the issues of lithium plating, gas production and expansion during the cycling process of the battery. The reason lies in that the first additive can form a protective barrier between the positive electrode plate and the electrolyte solution, slowing down the oxidative decomposition of the electrolyte solution by the positive electrode plate, thereby delaying gas production and the destruction of the positive electrode active material structure by the electrolyte solution. However, the proportion of the orthographic projection area of the positive electrode active material layer directly affects the side reaction activity between the positive electrode plate and the electrolyte solution. The greater the proportion of the orthographic projection area of the positive electrode active material layer, the higher the side reaction activity between the positive electrode plate and the electrolyte solution, and thus more first additive is needed to block the positive electrode plate from the electrolyte solution. The thickness of the termination tape directly affects the expansion of the battery. The thinner the termination tape, the weaker its restraining force on battery expansion, and thus more first additive is needed to inhibit gas production, thereby assisting in alleviating the expansion of the battery. Therefore, the three are closely related. When the three satisfy a specific relationship, the battery can remain stable, the side reactions between the electrolyte solution and the positive electrode active material are significantly reduced, and the gas production and expansion during the cycling process of the battery are also significantly reduced, thereby improving the overall performance of the battery.

Compared with the conventional technology, the present disclosure has at least the following advantages through the above technical solution: the battery of the present disclosure has less gas production and expansion during the cycling process, exhibiting excellent cycle life and cycling stability.

An endpoint and any value of the ranges disclosed herein are not limited to the exact ranges or values, and these ranges or values shall be understood to include values close to these ranges or values. For a numerical range, one or more new numerical ranges may be obtained in combination with each other between endpoint values of respective ranges, between endpoint values of respective ranges and individual point values, and between individual point values, and these numerical range should be considered as specifically disclosed herein.

### BRIEF DESCRIPTION OF THE DRAWINGS

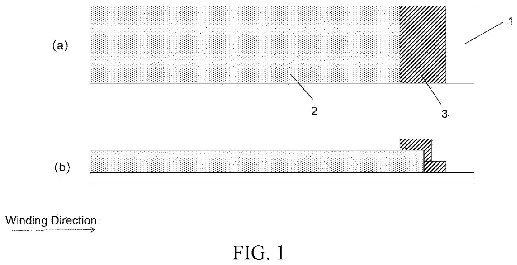

FIG. 1 shows a schematic diagram of a position of a termination tape on a positive electrode plate in an example of the present disclosure.

### DETAILED DESCRIPTION OF THE EMBODIMENTS

Specific implementations of the present disclosure are described below in detail. It should be understood that the specific implementations described herein are merely used for the purposes of illustrating and explaining the present disclosure, rather than limiting the present disclosure.

The present disclosure provides a battery, which may include an electrolyte solution and a positive electrode plate. The electrolyte solution may include a first additive, and the first additive may include a substance represented by Formula I:

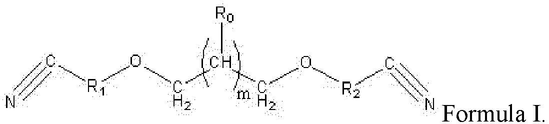

Where R₀ may be selected from at least one of 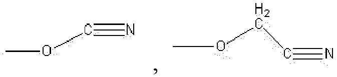 or 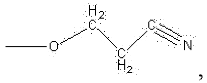 and R₁ and R₂ may each independently selected from C1-C3 alkyl group, and m is an integer from 2 to 4 (for example, m is 2, 3, or 4).

In the present disclosure, based on a total weight of the electrolyte solution, a content of the first additive is A. The positive electrode plate may include a positive electrode current collector and a positive electrode active material layer located on at least one surface of the positive electrode current collector. A proportion of an orthographic projection area of the positive electrode active material layer on the positive electrode current collector is B. The battery may further include a termination tape, which may be located at a tail end of the positive electrode plate along a winding direction, and the termination tape may cover part of the positive electrode active material layer, and a thickness of the termination tape is C, in unit of µm.

In the present disclosure, A, B, and C satisfy: 18 ≤ 19×B + 0.38×C - 100×A ≤ 38, for example, is 18, 19, 20, 21, 22, 23, 24, 25, 26, 27, 28, 29, 30, 31, 32, 33, 34, 35, 36, 37, or 38.

In an example, 22.6 ≤ 19×B + 0.38×C - 100×A ≤ 31.8.

In an example, 23.15 ≤ 19×B + 0.38×C - 100×A ≤ 30.

In the present disclosure, the C1-C3 alkyl group refers to an alkyl group with 1 to 3 carbon atoms, such as an alkyl group with 1 carbon atom, an alkyl group with 2 carbon atoms, or an alkyl group with 3 carbon atoms. The proportion of the orthographic projection area of the positive electrode active material layer on the positive electrode current collector B refers to the percentage of the projection area of the positive electrode active material layer in a direction perpendicular to the positive electrode current collector relative to the total projection area of the positive electrode current collector.

In the present disclosure, the termination tape has the conventional meaning in the art. As shown in FIG. 1, schematic diagram of a position of a termination tape on a positive electrode plate in an example of the present disclosure is shown, where FIG. 1(a) is a top view, and FIG. 1(b) is a side view. It can be seen from the figure that the positive electrode plate includes a positive electrode current collector 1 and a positive electrode active material layer 2 located on one surface of the positive electrode current collector 1. The positive electrode plate also includes a termination tape 3, which is located at the tail end of the positive electrode plate along the winding direction, and the termination tape 3 covers the positive electrode active material layer 2 near the tail end of the winding direction of the positive electrode current collector 1.

In the present disclosure, the termination tape includes a substrate and an adhesive layer on a surface of the substrate. The substrate may include at least one of polypropylene, polyester, or polyimide. The polyester may include at least one of polyethylene terephthalate, polylactic acid, or poly(1,4-butanediol succinate). The adhesive layer may include at least one of acrylic acid, acrylate, or rubber. The rubber includes, for example, at least one of SBS (Styrene-Butadiene-Styrene block copolymer), SIS (Styrene-Isoprene-Styrene block copolymer), or SEBS (Styrene-EthyleneButylene-Styrene block copolymer).

In an example, the substrate of the termination tape includes polypropylene, and the adhesive layer includes acrylic.

In an example, the substrate of the termination tape includes polyethylene terephthalate, and the adhesive layer includes acrylate.

In an example, the substrate of the termination tape includes polyethylene terephthalate, and the adhesive layer includes SBS.

It has been found that termination tapes with specific components have better compatibility with the first additive, which can enhance the suppression effect of the termination tape on battery expansion, thereby further improving the cycle life and cycling stability of the battery.

In the present disclosure, 0.1% ≤ A ≤ 8%, for example, is 0.1%, 0.5%, 1%, 2%, 3%, 4%, 5%, 6%, 7%, or 8%.

In an example, 0.2% ≤ A ≤ 5%.

In an example, 0.5% ≤ A ≤ 3%.

The first additive has both ether and cyano functional groups, making it not only structurally stable but also having strong antioxidant capabilities. Under the premise that A, B, and C satisfy a specific relationship, when the weight content of the first additive in the electrolyte solution is within a specific range, it can further reduce lithium plating, gas generation, and expansion during the cycling process of battery. The reason is: the first additive itself can remain stable, and the lone pair electrons of the oxygen and nitrogen atoms in the first additive can interact with the strongly oxidizing positive electrode active material, forming a protective layer on the positive electrode surface to prevent the electrolyte solution from being oxidized and decomposed by the positive electrode. Therefore, during the cycling process of the battery, the first additive can continuously play a protective role, avoiding corresponding side reactions, and allowing the electrolyte solution and positive electrode active material to remain stable for a long time. When the content of the first additive is low (for example, is less than 0.1%), it cannot effectively play a protective role; when the content of the first additive is high (for example, is greater than 8%), the first additive significantly deteriorates the negative electrode, leading to poor film formation on the negative electrode, thereby affecting the overall performance of the battery.

In the present disclosure, the weight content of the first additive in the electrolyte solution can be tested by conventional methods in the field, such as gas chromatography (GC) and/or liquid chromatography (LC).

In the present disclosure, 90% ≤ B ≤ 100%, for example, is 90%, 91%, 92%, 93%, 94%, 95%, 96%, 97%, 98%, 99%, 99.5%, or 100%.

In an example, 95% ≤ B ≤ 99.5%.

The proportion of the orthographic projection area of the positive electrode active material layer on the positive electrode current collector is an important parameter of the battery, which has a significant impact on the performance of the battery. An increase of the orthographic projection area means that more positive electrode active material can come into contact with the electrolyte solution, which helps to accelerate the transmission speed of lithium ions between the positive electrode plate and the electrolyte solution, thereby improving the charge-discharge rate and energy density of the battery. However, the greater the orthographic projection area, the more electrolyte solution is in an environment prone to oxidation, making it easier to decompose and deteriorate under the action of the positive electrode, thereby affecting battery performance. Under the premise that A, B, and C satisfy a specific relationship, when the proportion of the orthographic projection area of the positive electrode active material layer on the positive electrode current collector B is within a specific range, the electrolyte solution can remain stable even at higher voltages, enabling the battery to have higher energy density while further mitigating lithium plating, gas generation, and expansion.

In the present disclosure, 10 ≤ C ≤ 60, in unit of µm; for example, is 10, 15, 20, 25, 30, 35, 40, 45, 50, 55, or 60.

In an example, 20 ≤ C ≤ 35, in unit of µm.

It has been found that, under the premise that A, B, and C satisfy a specific relationship, when the thickness of the termination tape C is within a specific range, it is possible to ensure that the battery has a high volumetric energy density while further suppressing the volume expansion of the battery during charge-discharge cycling process. When the thickness of the termination tape is too small (for example, is less than 10µm), the restraining force of the termination tape on battery expansion is small, and the battery will deform under a small force, leading to issues such as electrolyte solution leakage; when the thickness of the termination tape is too large (for example, is greater than 60µm), it not only affects the volumetric energy density of the battery, but the excessively thick termination tape cannot provide additional restraining force, and instead affects the overall performance of the battery.

In the present disclosure, the first additive may include at least one of

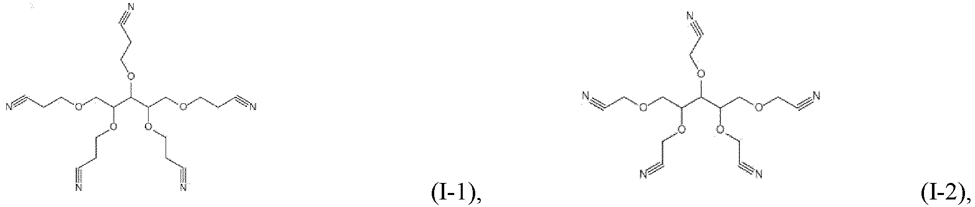

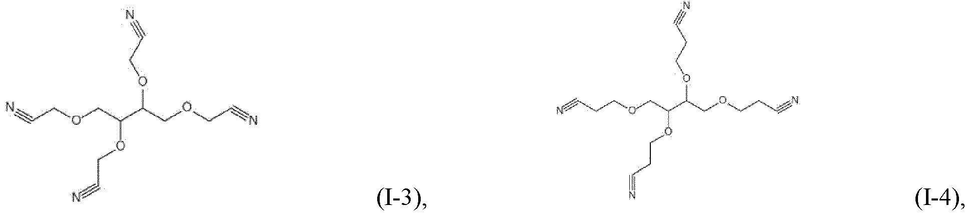

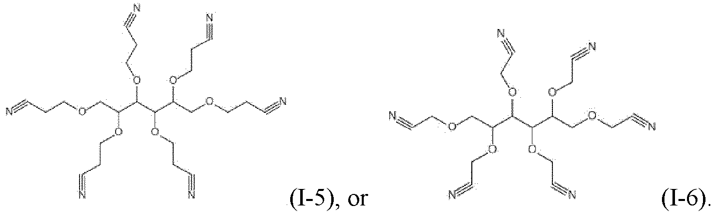

In an example, m is 3.

In an example, the first additive includes I-1.

In the present disclosure, 0.001 ≤ A/B ≤ 0.1, for example, is 0.001, 0.002, 0.003, 0.004, 0.005, 0.006, 0.007, 0.008, 0.009, 0.01, 0.02, 0.03, 0.04, 0.05, 0.06, 0.07, 0.08, 0.09, or 0.1.

In an example, 0.0051 ≤ A/B ≤ 0.031.

It can be understood that the greater the orthographic projection area of the positive electrode active material layer on the positive electrode current collector, the higher risks of side reactions between the positive electrode plate and the electrolyte solution, and thus more first additive is needed to block the positive electrode plate from the electrolyte solution to prevent the oxidation of the electrolyte solution by the positive electrode. The smaller the orthographic projection area of the positive electrode active material layer on the positive electrode current collector, the lower risks of side reactions between the positive electrode plate and the electrolyte solution, and thus less first additive is needed to block the positive electrode from the electrolyte solution. Therefore, under the premise that A, B, and C satisfy a specific relationship, it is necessary to regulate A/B within a specific range, where A and B are compatible, ensuring that the battery has a high energy density while further mitigating lithium plating, gas generation, and expansion.

In the present disclosure, 0.00005 ≤ A/C ≤ 0.004, for example, is 0.00005, 0.00006, 0.00007, 0.00008, 0.00009, 0.0001, 0.0002, 0.0003, 0.0004, 0.0005, 0.0006, 0.0007, 0.0008, 0.0009, 0.001, 0.002, 0.003, or 0.004.

In an example, 0.0002 ≤ A/C ≤ 0.002.

It can be understood that the thinner the termination tape, the weaker its restraining force on battery expansion, and thus more first additive is needed to reduce gas generation during charge-discharge cycling process to synergistically control battery expansion. The thicker the termination tape, the stronger its restraining force on battery expansion, and thus less first additive is needed to synergistically control battery expansion. Therefore, under the premise that A, B, and C satisfy a specific relationship, it is necessary to regulate A/C within a specific range, where the thickness of the termination tape can enhance the intrinsic strength of the battery, and the first additive can reduce gas generation during cycling process of battery. The combination of physical and chemical means ensures that the battery has a high volumetric energy density while further mitigating expansion, especially enabling the battery to have better capacity retention and lower expansion rate during high-temperature cycles.

In the present disclosure, the electrolyte solution may further include an isocyanate additive.

Since water can have adverse effects during cycling process of battery. For example, the presence of water may cause electrode active materials to lose activity, or react with the electrolyte solution to produce acidic substances such as hydrofluoric acid, which can be highly destructive to the battery, such as damaging the SEI (Solid Electrolyte Interphase) film, leading to a significant reduction in battery cycle capacity and severe gas generation. The water content is strictly controlled during the battery manufacturing process. However, there may be some undetectable bound water in the main materials used to prepare the battery, making it impossible to completely remove water from the battery. It has been found that isocyanate additives can react with water, and when the weight content of isocyanate additives in the electrolyte solution is within a specific range, the generated products have no significant adverse effects on battery performance. Therefore, when the electrolyte solution includes an isocyanate additive, it can protect the battery from the effects of water, further improving the cycle life and cycling stability of the battery.

In the present disclosure, based on the total weight of the electrolyte solution, a content of the isocyanate additive is less than or equal to 5%, for example, is 0, 0.1%, 0.2%, 0.5%, 1%, 2%, 3%, 4%, or 5%.

In an example, based on the total weight of the electrolyte solution, the content of the isocyanate additive ranges from 0.2% to 3%.

In an example, based on the total weight of the electrolyte solution, the content of the isocyanate additive ranges from 0.5% to 2%.

In the present disclosure, the weight content of the isocyanate additive in the electrolyte solution can be tested by conventional methods in the art, such as GC.

In the present disclosure, the isocyanate additive may include at least one of hexamethylene diisocyanate, isophorone diisocyanate, p-toluenesulfonyl isocyanate, 4-methoxyphenyl isocyanate, pentafluorophenyl isocyanate, or 3-isocyanatopropyltrimethoxysilane.

In an example, the isocyanate additive includes hexamethylene diisocyanate.

In the present disclosure, the electrolyte solution may further include a silicon-containing additive.

Hydrofluoric acid, as a common harmful substance in electrolyte solution, has a significant destructive effect on the stable working of the battery. Hydrofluoric acid can not only directly react with the electrode active material, causing it to decompose and its structure to be destroyed, but also catalyze the decomposition of carbonate compounds in the electrolyte solution, leading to deterioration of the electrolyte solution components and inability to work stably. In addition, hydrofluoric acid may be deoxidated to hydrogen gas, further causing the battery to produce gas and expand. Silicon and fluorine have a strong interaction force, which can form a stable and battery-performance-friendly Si-F bond. When a silicon-containing additive is added to the electrolyte solution, the silicon-containing additive will first react with hydrofluoric acid and produce silicon fluoride compounds that do not affect other components of the battery. These silicon fluoride compounds can participate in the formation of the SEI film, making the SEI film more robust and stable, which is beneficial for suppressing battery expansion and further improving cycling stability.

In the present disclosure, based on the total weight of the electrolyte solution, a content of the silicon-containing additive is less than or equal to 5%, for example, is 0, 0.1%, 0.2%, 0.5%, 1%, 2%, 3%, 4%, or 5%.

In an example, based on the total weight of the electrolyte solution, the content of the silicon-containing additive ranges from 0.2% to 3%.

In an example, based on the total weight of the electrolyte solution, the content of the silicon-containing additive ranges from 0.5% to 2%.

When the content of the silicon-containing additive in the electrolyte solution is low (for example, is less than 0.2%), the silicon-containing additive cannot completely and effectively remove hydrofluoric acid, which is detrimental to the cycling stability of the battery. When the content of the silicon-containing additive is high (for example, is greater than 5%), the content of the silicon fluoride compounds formed by the silicon-containing additive is abundant, resulting in an overly thick SEI film, which increases battery internal resistance and deteriorates its low-temperature performance.

In the present disclosure, the silicon-containing additive may include at least one of tris(trimethylsilyl) borate, tris(trimethylsilyl) phosphate, tris(pentafluorophenyl)borane, or allyloxytrimethylsilane.

In an example, the silicon-containing additive includes tris(trimethylsilyl) borate.

In the present disclosure, the weight content of the silicon-containing additive in the electrolyte solution can be tested by conventional methods in the art, such as GC.

In the present disclosure, the electrolyte solution may further include a lithium salt. The lithium salt may include at least one of lithium hexafluorophosphate (LiPF₆), lithium difluorophosphate (LiPO₂F₂), lithium difluorooxalate borate (LiDFOB), lithium bis(trifluoromethanesulfonyl)imide, lithium bis(oxyalyl)difluorophosphate, lithium tetrafluoroborate, lithium bisoxalate borate, lithium hexafluoroantimonate(V), lithium hexafluorarsenate(V), lithium bis(pentafluoroethanesulfonyl)imide, lithium tris(trifluoromethanesulfonyl)methide, or lithium bis(trifluoromethanesulfonyl)imide. Based on the total weight of the electrolyte solution, a content of the lithium salt may range from 10% to 20%, for example, is 10%, 11%, 12%, 13%, 14%, 15%, 16%, 17%, 18%, 19%, or 20%.

In the present disclosure, the electrolyte solution may further include a second additive. The second additive may include at least one of succinonitrile, adiponitrile, glutaronitrile, pimelonitrile, suberonitrile, sebaconitrile, 1,2-bis(cyanoethoxy)ethane, 1,3,6-hexanetricarbonitrile, glycerin trinitrile, 1,3,5-pentanetricarbonitrile, tris(2-cyanoethyl)phosphine, vinylene carbonate, vinyl ethylene carbonate, fluoroethylene carbonate, ethylene sulfate, 1,2-bis(2-cyanoethoxy)ethane, 1,3-propane sultone, or 1,3-propene sultone. Specific additives can form a stable protective film on the surface of the positive/negative electrode plate, thereby effectively reducing the occurrence of side reactions between the positive/negative electrode plate and the electrolyte solution, which is beneficial for further improving the cycling stability of the battery.

In the present disclosure, based on the total weight of the electrolyte solution, a content of the second additive may range from 1% to 30%, for example, is 1%, 2%, 3%, 4%, 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29%, or 30%.

In the present disclosure, the electrolyte solution may further include an organic solvent, and the organic solvent may include at least one of carbonate compound or carboxylate compound. The carbonate compound may include at least one of ethylene carbonate (EC), fluorinated or non-fluorinated propylene carbonate (PC), fluorinated or non-fluorinated dimethyl carbonate, fluorinated or non-fluorinated diethyl carbonate (DEC), or fluorinated or non-fluorinated ethyl methyl carbonate. The carboxylate compound may include at least one of propyl acetate, n-butyl acetate, isobutyl acetate, n-amyl acetate, isoamyl acetate, ethyl propionate, propyl propionate (PP), methyl butyrate, or ethyl butyrate.

In the present disclosure, the positive electrode active material layer may include a positive electrode active material. The positive electrode active material may include at least one of lithium-containing transition metal oxide, lithium ferrous phosphate, or lithium manganese oxide. The lithium-containing transition metal oxide may include a substance with the chemical formula Li₁₊ₐNi_{b}Co_{c}M_{d}O₂, where -0.1 ≤ a ≤ 1 (for example, is -0.1, 0, 0.1, 0.2, 0.3, 0.4, 0.5, 0.6, 0.7, 0.8, 0.9, or 1), 0 ≤ b ≤ 1 (for example, is 0, 0.1, 0.2, 0.3, 0.4, 0.5, 0.6, 0.7, 0.8, 0.9, or 1), 0 ≤ c ≤ 1 (for example, is 0, 0.1, 0.2, 0.3, 0.4, 0.5, 0.6, 0.7, 0.8, 0.9, or 1), 0 ≤ d < 1 (for example, is 0, 0.1, 0.2, 0.3, 0.4, 0.5, 0.6, 0.7, 0.8, 0.9, or 0.99), and M may include at least one of Mg, Zn, Ga, Ba, Al, Fe, Cr, Sn, V, Mn, Sc, Ti, Nb, Mo, or Zr.

In an example, 0 ≤ b < 1.

In an example, 0 < c ≤ 1.

In an example, the positive electrode active material includes lithium cobalt oxide.

In the present disclosure, the positive electrode active material layer may further include a positive electrode conductive agent and a positive electrode binder. The positive electrode conductive agent may be a conductive agent conventionally used in the field, for example, including at least one of conductive carbon black, acetylene black, Ketjen black, conductive graphite, conductive carbon fiber, carbon nanotubes (including at least one of single-walled carbon nanotubes or multi-walled carbon nanotubes), or metal powder. The positive electrode binder may include a binder conventionally used in the field, for example, including at least one of sodium carboxymethyl cellulose, polyvinylidene fluoride, styrene-butadiene rubber, polytetrafluoroethylene, or polyoxyethylene.

In the present disclosure, based on a total weight of the positive electrode active material layer, a content of the positive electrode active material may range from 80% to 99.8% (for example, is 80%, 82%, 84%, 86%, 88%, 90%, 92%, 94%, 96%, 98%, 99%, or 99.8%), a content of the positive electrode conductive agent may range from 0.1% to 10% (for example, is 10%, 9%, 8%, 7%, 6%, 5%, 4%, 3%, 2%, 1%, 0.5%, or 0.1%), and a content of the positive electrode binder may range from 0.1% to 10% (for example, is 10%, 9%, 8%, 7%, 6%, 5%, 4%, 3%, 2%, 1%, 0.5%, or 0.1%).

**In** an example, based on the total weight of the positive electrode active material layer, the content of the positive electrode active material ranges from 90% to 99.6%, the content of the positive electrode conductive agent ranges from 0.2% to 5%, and the content of the positive electrode binder ranges from 0.2% to 5%.

**In** the present disclosure, the battery may further include a negative electrode plate. The negative electrode plate may include a negative electrode current collector and a negative electrode active material layer on at least one surface of the negative electrode current collector. The negative electrode active material layer may include a negative electrode active material, a negative electrode conductive agent, and a negative electrode binder. The negative electrode active material may include at least one of natural graphite, artificial graphite, mesocarbon microbeads, soft carbon, hard carbon, silicon, silicon oxide, silicon carbon, and silicon alloy. The silicon oxide has the conventional meaning in the field, and it is generally considered that silicon oxide is a material including silicon and oxygen. The silicon carbon also has the conventional meaning in the field, and it is generally considered that silicon carbon is a material including silicon and carbon. The negative electrode conductive agent may be selected from conventional conductive agents used in the field, for example, including at least one of conductive carbon black, acetylene black, Ketjen black, conductive graphite, conductive carbon fiber, carbon nanotubes (including at least one of single-walled carbon nanotubes or multi-walled carbon nanotubes), or metal powder. The negative electrode binder may include conventional binders used in the field, for example, including at least one of sodium carboxymethyl cellulose, polyvinylidene fluoride, styrene-butadiene rubber, polytetrafluoroethylene, or polyoxyethylene.

The negative electrode active material may include a core and a shell layer on an outer surface of the core. Based on a total weight of the negative electrode active material, a content of the core may range from 40% to 65% (for example, is 40%, 45%, 50%, 55%, 60%, or 65%), and a content of the shell layer may range from 35% to 60% (for example, is 60%, 55%, 50%, 45%, 40%, or 35%).

**In** the present disclosure, based on a total weight of the negative electrode active material layer, a content of the negative electrode active material may range from 80% to 99.8% (for example, is 80%, 82%, 84%, 86%, 88%, 90%, 92%, 94%, 96%, 98%, 99%, or 99.8%), a content of the negative electrode conductive agent may range from 0.1% to 10% (for example, is 10%, 9%, 8%, 7%, 6%, 5%, 4%, 3%, 2%, 1%, 0.5%, or 0.1%), and a content of the negative electrode binder may range from 0.1% to 10% (for example, is 10%, 9%, 8%, 7%, 6%, 5%, 4%, 3%, 2%, 1%, 0.5%, or 0.1%).

In an example, based on the total weight of the negative electrode active material layer, the content of the negative electrode active material ranges from 90% to 99.6%, the content of the negative electrode conductive agent ranges from 0.2% to 5%, and the content of the negative electrode binder ranges from 0.2% to 5%.

In the present disclosure, the battery may further include a separator. The separator may include conventional separators used in the field, for example, the separator includes at least one of polyethylene or polypropylene.

In an example, the battery includes a lithium-ion battery.

It should be noted that numerical expressions such as "first" and "second" in the present disclosure are only used to distinguish between different objects or usages, and do not represent a difference in order.

The following describes the present disclosure in detail by using embodiments. The embodiments described in the present disclosure are merely some, but not all of the embodiments of the present disclosure. All other embodiments obtained by a person of ordinary skill in the art based on the embodiments of the present disclosure without creative efforts fall within the protection scope of the present disclosure.

In the following examples, unless otherwise specified, all materials used were commercially available analytical reagents.

The following examples are used to illustrate the battery of the present disclosure.

### Example 1

The battery was prepared according to the following method.

### (1) Preparation of a positive electrode plate.

A positive electrode active material (lithium cobalt oxide), polyvinylidene fluoride, conductive carbon black, and carbon nanotubes were mixed at a weight ratio of 8:1:0.5:0.5, N-methylpyrrolidone (NMP) was added, stirring was performed under action of a vacuum mixer until a mixture system became a positive electrode active slurry with uniform fluidity; the positive electrode active slurry was evenly applied on two surfaces of an aluminum foil; and the coated aluminum foil was dried, followed by roll-pressing and cutting, to obtain the required positive electrode plate, where a proportion of a orthographic projection area of a positive electrode active material layer on a positive electrode current collector B is 98%.

### (2) Preparation of a negative electrode plate

A negative electrode active material (artificial graphite), sodium carboxymethyl cellulose, styrene-butadiene rubber, conductive carbon black, and carbon nanotubes were mixed at a weight ratio of 94.5:2.5:1.5:1:0.5, deionized water was added, a negative electrode active slurry was obtained under action of a vacuum mixer; the negative electrode active slurry was evenly applied on two surfaces of a copper foil; and the coated copper foil was dried at room temperature, and then transferred to an 80°C oven for 10 hours of drying, followed by cold pressing and cutting to obtain the negative electrode plate.

### (3) Preparation of an electrolyte solution

In an argon-filled glove box (H₂O < 0.1 ppm, O₂ < 0.1 ppm), EC, PC, DEC, and PP were evenly mixed at a weight ratio of 1:2:7:1 to obtain a mixed solvent, then fully dried lithium hexafluorophosphate (LiPF₆) that accounted for 14% of a total weight of the electrolyte solution was quickly added into the mixed solvent, a first additive (I-1), an isocyanate additive (hexamethylene diisocyanate), a silicon-containing additive (tris(trimethylsilyl) borate), and a second additive (fluoroethylene carbonate that accounted for 12% of the total weight of the electrolyte solution) were added after LiPF₆ was dissolved, the mixture was stirred evenly, and the required electrolyte solution was obtained after passing water content and free acid tests, where the specific amounts of the first additive, isocyanate additive, and silicon-containing additive are shown in Table 1.

### (4) Preparation of a battery

The positive electrode plate prepared in step (1), the negative electrode plate prepared in step (2), and a separator (polyethylene film with a thickness of 8 µm) were stacked in an order of the positive electrode plate, the separator, the negative electrode plate, and the separator, followed by winding to obtain a electrochemical cell, a termination tape was applied to the end of the positive electrode plate along the winding direction, where the termination tape covers part of the positive electrode active material layer; the electrochemical cell was placed in outer packaging aluminum foil, and the electrolyte solution prepared in step (3) was injected into the outer packaging, followed by processes such as vacuum packaging, standing, formation, shaping, and sorting, to obtain the battery, where a thickness of the termination tape C is 20 µm, the termination tape is made of a polypropylene substrate and an adhesive layer on the surface of the polypropylene substrate, and the adhesive layer includes acrylic.

### Example 2

For this example, reference is made to Example 1. Differences are amounts of three components in the electrode solution were changed: the first additive, the isocyanate additive, and the silicon-containing additive in the electrolyte solution, as detailed in Table 1.

### Example 3

For this example, reference is made to Example 1. Differences are amounts of three components in the electrode solution were changed: the first additive, the isocyanate additive, and the silicon-containing additive in the electrolyte solution, as detailed in Table 1.

### Example Group 4

This example group is used to verify the impact of the change in "19×B + 0.38×C - 100×A".

For this example group, reference is made to Example 1. Differences are A, B, and/or C were changed, as detailed in Table 1.

### Example 5

This example is used to verify the impact of the change in "the first additive".

For this example, reference is made to Example 1. A difference is the first additive I-1 is replaced with the same weight of I-2.

### Example Group 6

This example group is used to verify the impact of the change in "the weight content of the first additive in the electrolyte solution A".

For this example group, reference is made to Example 1. A difference is A was changed, as detailed in Table 1.

### Example Group 7

This example group is used to verify the impact of the change in "the isocyanate additive".

For this example group, reference is made to Example 1. A difference is the isocyanate additive was changed, as detailed below.

Example 7a, hexamethylene diisocyanate was replaced with the same weight of isophorone diisocyanate.

Example 7b, hexamethylene diisocyanate was replaced with the same weight of p-toluenesulfonyl isocyanate.

### Example Group 8

This example group is used to verify the impact of the change in "the weight content of the isocyanate additive in the electrolyte solution".

For this example group, reference is made to Example 1. A difference is the amount of the isocyanate additive in the electrolyte solution was changed, as detailed in Table 1.

### Example 9

This example is used to verify the impact of the change in "the silicon-containing additive".

For this example, reference is made to Example 1. A difference is the silicon-containing additive tris(trimethylsilyl) borate was replaced with the same weight of tris(trimethylsilyl) phosphate.

### Example Group 10

This example group is used to verify the impact of the change in "the weight content of the silicon-containing additive in the electrolyte solution".

For this example group, reference is made to Example 1. A difference is the amount of the silicon-containing additive in the electrolyte solution was changed, as detailed in Table 1.

### Example Group 11

This example group is used to verify the impact of the change in "the proportion of the orthographic projection area of the positive electrode active material layer on the positive electrode current collector B".

For this example group, reference is made to Example 1. A difference is B was changed, as detailed in Table 1.

### Example 12

This example is used to verify the impact of the change in "the positive electrode active material".

For this example, reference is made to Example 1. A difference is the positive electrode active material lithium cobalt oxide was replaced with a combination of lithium cobalt oxide and nickel cobalt manganese oxide NCM811 in the same weight, with a weight ratio of lithium cobalt oxide to nickel cobalt manganese oxide NCM811 of 8:2.

### Example Group 13

This example group is used to verify the impact of the change in "the substrate of the termination tape".

For this example, reference is made to Example 1. A difference is the substrate of the termination tape was changed, as detailed below.

Example 13a, the substrate of the termination tape is polyimide.

Example 13b, the substrate of the termination tape is polyethylene terephthalate.

### Example Group 14

This example group is used to verify the impact of the change in "the thickness of the termination tape C".

For this example group, reference is made to Example 1. A difference is C was changed, as detailed in Table 1.

### Example Group 15

This example group is used to verify the impact of the change in "the termination tape".

For this example group, reference is made to Example 1. A difference is the termination tape was changed, as detailed below.

Example 15a, the substrate of the termination tape is polyethylene terephthalate, and the adhesive layer includes acrylate.

Example 15b, the substrate of the termination tape is polyethylene terephthalate, and the adhesive layer includes SBS.

### Comparative Example 1

Referring to Example 1, differences are A, B, and C were changed, as detailed in Table 1.

### Comparative Example 2

Referring to Example 1, difference are A, B, and C were changed, as detailed in Table 1.

### Comparative Example 3

Referring to Example 1, a difference is the first additive was not contained in the electrolyte solution.

**Table 1**

| | A | Content of the isocyanate additive | Content of the silicon-containing additive | B | C (µm) | 19×B + 0.38×C - 100×A | A/B | A/C |
|---|---|---|---|---|---|---|---|---|
| Example 1 | 2% | 1.2% | 1.2% | 98% | 20 | 24.22 | 0.0204 | 0.001 |
| Example 2 | 0.5% | 0.5% | 0.5% | * | * | 25.72 | 0.0051 | 0.00025 |
| Example 3 | 3% | 2% | 2% | * | * | 23.22 | 0.0306 | 0.0015 |
| Example 4a | 0.5% | * | * | 99.5% | 35 | 31.71 | 0.005 | 0.00014 |
| Example 4b | 3% | * | * | 95% | * | 22.65 | 0.0316 | 0.0015 |
| Example 5 | * | * | * | * | * | * | * | * |
| Example 6a | 0.1% | * | * | * | * | 26.12 | 0.001 | 0.00005 |
| Example 6b | 0.2% | * | * | * | * | 26.02 | 0.002 | 0.0001 |
| Example 6c | 5% | * | * | * | * | 21.22 | 0.051 | 0.0025 |
| Example 6d | 8% | * | * | * | * | 18.22 | 0.0816 | 0.004 |
| Example 7a | * | * | * | * | * | * | * | * |
| Example 7b | * | * | * | * | * | * | * | * |
| Example 8a | * | 0 | * | * | * | * | * | * |
| Example 8b | * | 0.2% | * | * | * | * | * | * |
| Example 8c | * | 3% | * | * | * | * | * | * |
| Example 8d | * | 5% | * | * | * | * | * | * |
| Example 9 | * | * | * | * | * | * | * | * |
| Example 10a | * | * | 0 | * | * | * | * | * |
| Example 10b | * | * | 0.2% | * | * | * | * | * |
| Example 10c | * | * | 3% | * | * | * | * | * |
| Example 10d | * | * | 5% | * | * | * | * | * |
| Example 11a | * | * | * | 90% | * | 22.7 | 0.0222 | * |
| Example 11b | * | * | * | 92% | * | 23.08 | 0.0217 | * |
| Example 11c | * | * | * | 95% | * | 23.65 | 0.0211 | * |
| Example 11d | * | * | * | 99.5% | * | 24.51 | 0.0201 | * |
| Example 12 | * | * | * | * | * | * | * | * |
| Example 13a | * | * | * | * | * | * | * | * |
| Example 13b | * | * | * | * | * | * | * | * |
| Example 14a | * | * | * | * | 15 | 22.32 | * | 0.0013 |
| Example 14b | * | * | * | * | 30 | 28.02 | * | 0.00067 |
| Example 14c | * | * | * | * | 35 | 29.92 | * | 0.00057 |
| Example 14d | * | * | * | * | 55 | 37.52 | * | 0.00036 |
| Example 15a | * | * | * | * | * | * | * | * |
| Example 15b | * | * | * | * | * | * | * | * |
| Comparative Example 1 | 1% | * | * | 98% | 60 | 40.42 | 0.0102 | 0.00017 |
| Comparative Example 2 | 3% | * | * | 90% | 10 | 17.9 | 0.0333 | 0.003 |

Note: The "*" in Table 1 indicates that the value of this example is the same as that of the referenced example.

### Test Example

### (1) Cycling performance test at 25°C

The batteries obtained in the Examples and Comparative Examples were charged and discharged for 500 cycles within a charge-discharge cut-off voltage range (3.0 V-4.5 V) at a rate of 1C at 25°C. A discharge capacity of the first cycle was tested and recorded as x1 mAh, and a fully charged thickness of the batteries was tested and recorded as y1; a discharge capacity of the 500^{th} cycle was tested and recorded as x2 mAh, and a fully charged thickness of the batteries after the 500^{th} cycle was tested and recorded as y2. A cycling capacity retention rate R1 of the 500^{th} cycle was x2/x1; a thickness expansion rate H1 of the batteries at the 500^{th} cycle was (y2 - y1)/y1, and the results were recorded in Table 2.

### (2) Cycling performance test at 45°C

The batteries obtained in the Examples and Comparative Examples charged and discharged for 500 cycles within a charge-discharge cut-off voltage range (3.0 V-4.5 V) at a rate of 1C at 45°C. A discharge capacity of the first cycle was tested and recorded as x3 mAh, and a fully charged thickness of the batteries was tested and recorded as y3; a discharge capacity of the 500^{th} cycle was tested and recorded as x4 mAh, and a fully charged thickness of the batteries after the 500^{th} cycle was tested and recorded as y4. A cycling capacity retention rate R2 of the 500^{th} cycle was x4/x3; a thickness expansion rate H2 of the batteries at the 500th cycle was (y4 - y3)/y3, and the results were recorded in Table 2.

### (3) Lithium plating test

The batteries obtained in the Examples and Comparative Examples were charged to 4.5 V at a constant current and voltage of 3.0 C at 25°C, with a cut-off current of 0.05 C, and then discharged to 3.0 V at a constant current of 0.5 C. After 20 cycles, the batteries were fully charged and dissected to observe a lithium plating status, where the degree of lithium plating ranged from no lithium plating, slight lithium plating, lithium plating, to severe lithium plating.

**Table 2**

| | Cycling performance test at 25°C | | Cycling performance test at 45°C | | Lithium plating test |
|---|---|---|---|---|---|
| | Capacity retention rate | Thickness expansion rate | Capacity retention rate | Thickness expansion rate | |
| Example 1 | 93.6% | 7.5% | 89.4% | 11.0% | No lithium plating |
| Example 2 | 94.3% | 6.7% | 90.5% | 10.2% | No lithium plating |
| Example 3 | 93.2% | 6.9% | 89.9% | 10.9% | No lithium plating |
| Example 4a | 87.2% | 11.3% | 83.6% | 14.8% | Slight lithium plating |
| Example 4b | 87.5% | 11.1% | 84.0% | 14.9% | Slight lithium plating |
| Example 5 | 92.6% | 7.9% | 88.3% | 11.6% | No lithium plating |
| Example 6a | 88.5% | 10.6% | 85.4% | 13.1% | Lithium plating |
| Example 6b | 89.1% | 10.2% | 86.3% | 12.8% | Slight lithium plating |
| Example 6c | 87.6% | 11.5% | 84.7% | 13.8% | Slight lithium plating |
| Example 6d | 86.2% | 12.9% | 83.1% | 14.7% | Lithium plating |
| Example 7a | 92.5% | 8.1% | 88.6% | 12.1% | No lithium plating |
| Example 7b | 91.9% | 8.8% | 88.1% | 12.4% | No lithium plating |
| Example 8a | 88.9% | 10.6% | 85.3% | 13.7% | No lithium plating |
| Example 8b | 92.3% | 7.9% | 88.5% | 11.6% | No lithium plating |
| Example 8c | 91.2% | 8.5% | 87.9% | 12.0% | No lithium plating |
| Example 8d | 90.1% | 9.3% | 86.3% | 12.9% | No lithium plating |
| Example 9 | 92.4% | 8.1% | 88.9% | 11.7% | No lithium plating |
| Example 10a | 87.6% | 11.2% | 84.1% | 14.3% | No lithium plating |
| Example 10b | 90.1% | 9.8% | 87.2% | 12.9% | No lithium plating |
| Example 10c | 89.2% | 10.4% | 86.3% | 13.5% | No lithium plating |
| Example 10d | 88.3% | 10.8% | 85.0% | 14.0% | No lithium plating |
| Example 11a | 89.3% | 9.4% | 85.9% | 13.7% | No lithium plating |
| Example 11b | 90.5% | 8.8% | 86.6% | 12.9% | No lithium plating |
| Example 11c | 93.3% | 7.8% | 89.2% | 11.6% | No lithium plating |
| Example 11d | 93.1% | 7.7% | 89.6% | 11.2% | No lithium plating |
| Example 12 | 92.1% | 8.3% | 88.7% | 12.5% | No lithium plating |
| Example 13a | 91.6% | 8.9% | 87.3% | 12.8% | No lithium plating |
| Example 13b | 91.3% | 9.2% | 87.0% | 13.4% | No lithium plating |
| Example 14a | 90.3% | 9.3% | 86.5% | 12.9% | No lithium plating |
| Example 14b | 93.1% | 7.9% | 89.0% | 11.6% | No lithium plating |
| Example 14c | 92.9% | 8.1% | 88.6% | 11.8% | No lithium plating |
| Example 14d | 93.0% | 7.8% | 89.1% | 11.4% | No lithium plating |
| Example 15a | 94.1% | 7.2% | 89.9% | 10.7% | No lithium plating |
| Example 15b | 93.8% | 7.4% | 89.7% | 10.9% | No lithium plating |
| Comparative Example 1 | 80.6% | 15.7% | 75.8% | 22.1% | Severe lithium plating |
| Comparative Example 2 | 81.3% | 14.9% | 76.2% | 21.5% | Severe lithium plating |
| Comparative Example 3 | 80.5% | 15.3% | 76.0% | 21.9% | Severe lithium plating |

As can be seen from Table 2, the batteries of the present disclosure significantly improve cycling performance and reduce lithium plating compared to the comparative examples.

The foregoing describes in detail a preferred implementation of the present disclosure. However, the present disclosure is not limited thereto. Within the scope of the technical concepts of the present disclosure, various simple variations may be implemented to the technical solutions of the present disclosure, including combinations of technical features in any other suitable manner. These simple variations and combinations shall also be considered as the disclosure of the present disclosure and shall fall within the protection scope of the present disclosure.

## Claims

1. A battery, **characterized by** comprising an electrolyte solution and a positive electrode plate; the electrolyte solution comprises a first additive, and the first additive comprises a substance shown in Formula I: 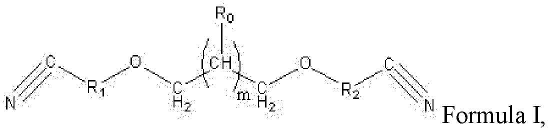
wherein R₀ is selected from at least one of 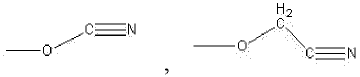 or 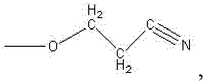 R₁ and R₂ are independently selected from C1-C3 alkyl group, m is an integer of 2-4; based on a total weight of the electrolyte solution, a content of the first additive is A;
the positive electrode plate comprises a positive electrode current collector and a positive electrode active material layer located on at least one side surface of the positive electrode current collector, a proportion of an orthographic projection area of the positive electrode active material layer on the positive electrode current collector is B;
the battery further comprises a termination tape, the termination tape is located at a tail end of the positive electrode plate along a winding direction and covers part of the positive electrode active material layer, and a thickness of the termination tape is C, in unit of µm;
A, B, and C satisfy: 18 ≤ 19×B + 0.38×C - 100×A ≤ 38.

2. The battery according to claim 1, **characterized in that** 22.6 ≤ 19×B + 0.38×C - 100×A ≤ 31.8;
preferably, 23.15 ≤ 19×B + 0.38×C - 100×A ≤ 30.

3. The battery according to claim 1 or 2, **characterized in that** the termination tape comprises a substrate and an adhesive layer on a surface of the substrate;
preferably, the substrate comprises at least one of polypropylene, polyester, or polyimide;
preferably, the adhesive layer comprises at least one of acrylic acid, acrylate, or rubber.

4. The battery according to claim 3, **characterized in that** the substrate comprises polypropylene, and the adhesive layer comprises acrylic;
preferably, the substrate comprises polyethylene terephthalate, and the adhesive layer comprises acrylate;
preferably, the substrate comprises polyethylene terephthalate, and the adhesive layer comprises Styrene-Butadiene-Styrene block copolymer.

5. The battery according to any one of claims 1 to 4, **characterized in that** 0.1% ≤ A ≤ 8%; preferably, 0.2% ≤ A ≤ 5%;
more preferably, 0.5% ≤ A ≤ 3%.

6. The battery according to any one of claims 1 to 5, **characterized in that** 90% ≤ B ≤ 100%; preferably, 95% ≤ B ≤ 99.5%; and/or
10 ≤ C ≤ 60, in unit of µm;
preferably, 20 ≤ C ≤ 35.

7. The battery according to any one of claims 1 to 6, **characterized in that** the first additive comprises at least one of 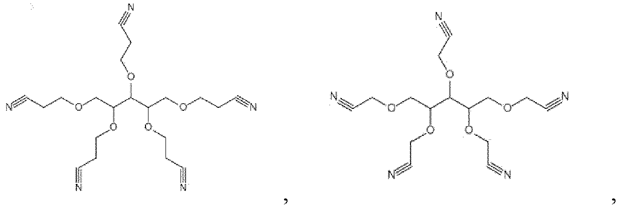 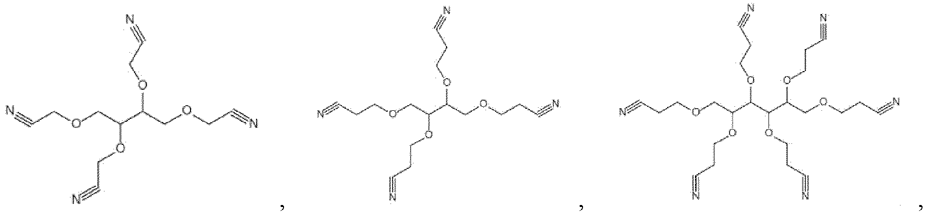 or 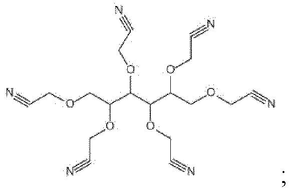 preferably, m is 3; more preferably, the first additive comprises

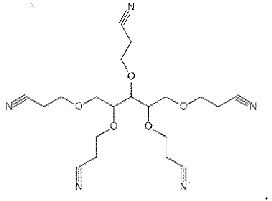

8. The battery according to any one of claims 1 to 7, **characterized in that** 0.001 ≤ A/B ≤ 0.1;
preferably, 0.0051 ≤ A/B ≤ 0.031.

9. The battery according to any one of claims 1 to 8, **characterized in that** 0.00005 ≤ A/C ≤ 0.004;
preferably, 0.0002 ≤ A/C ≤ 0.002.

10. The battery according to any one of claims 1 to 9, **characterized in that** the electrolyte solution further comprises an isocyanate additive;
preferably, based on the total weight of the electrolyte solution, a content of the isocyanate additive is less than or equal to 5%;
preferably, the isocyanate additive comprises at least one of hexamethylene diisocyanate, isophorone diisocyanate, p-toluenesulfonyl isocyanate, 4-methoxyphenyl isocyanate, pentafluorophenyl isocyanate, or 3-isocyanatopropyltrimethoxysilane.

11. The battery according to claim 10, **characterized in that** based on the total weight of the electrolyte solution, the content of the isocyanate additive ranges from 0.2% to 3%; preferably, ranges from 0.5% to 2%; and/or
the isocyanate additive comprises hexamethylene diisocyanate.

12. The battery according to any one of claims 1 to 11, **characterized in that** the electrolyte solution further comprises a silicon-containing additive;
preferably, based on the total weight of the electrolyte solution, a content of the silicon-containing additive is less than or equal to 5%;
preferably, the silicon-containing additive comprises at least one of tris(trimethylsilyl) borate, tris(trimethylsilyl) phosphate, tris(pentafluorophenyl) borane, or allyloxytrimethylsilane.

13. The battery according to claim 12, **characterized in that** based on the total weight of the electrolyte solution, the content of the silicon-containing additive ranges from 0.2% to 3%; preferably, ranges from 0.5% to 2%; and/or
the silicon-containing additive comprises tris(trimethylsilyl) borate.

14. The battery according to any one of claims 1 to 13, **characterized in that** the electrolyte solution further comprises a lithium salt; preferably, based on the total weight of the electrolyte solution, a content of the lithium salt ranges from 10% to 20%; and/or
the electrolyte solution further comprises a second additive, the second additive comprises at least one of succinonitrile, adiponitrile, glutaronitrile, pimelonitrile, suberonitrile, sebaconitrile, 1,2-bis(cyanoethoxy)ethane, 1,3,6-hexanetricarbonitrile, glycerin trinitrile, 1,3,5-pentanetricarbonitrile, tris(2-cyanoethyl)phosphine, vinylene carbonate, vinyl ethylene carbonate, fluoroethylene carbonate, ethylene sulfate, 1,2-bis(2-cyanoethoxy)ethane, 1,3-propane sultone, or 1,3-propene sultone; preferably, based on the total weight of the electrolyte solution, a content of the second additive ranges from 1% to 30%.

15. The battery according to any one of claims 1 to 14, **characterized in that** the positive electrode active material layer comprises a positive electrode active material;
preferably, the positive electrode active material comprises a substance with the chemical formula Li₁₊ₐNi_{b}Co_{c}M_{d}O₂, wherein -0.1 ≤ a ≤ 1, 0 ≤ b < 1, 0 < c ≤ 1, 0 ≤ d < 1, and M comprises at least one of Mg, Zn, Ga, Ba, Al, Fe, Cr, Sn, V, Mn, Sc, Ti, Nb, Mo, or Zr.
